Europäisches Patentamt

(19) European Patent Office

Office européen des brevets

(11) Publication number: **0 284 142 B1**

## (12) EUROPEAN PATENT SPECIFICATION

(45) Date of publication of patent specification:
**12.06.91 Bulletin 91/24**

(51) Int. Cl.⁵: **F24H 1/44, F24C 15/20**

(21) Application number: **88200469.0**

(22) Date of filing: **11.03.88**

(54) **Device for a building with provisions for the discharge of exhausted air, the supply of fresh air and the heating of the rooms of the building.**

(30) Priority: **16.03.87 NL 8700622**

(43) Date of publication of application:
**28.09.88 Bulletin 88/39**

(45) Publication of the grant of the patent:
**12.06.91 Bulletin 91/24**

(84) Designated Contracting States:
**AT BE CH DE ES FR GB IT LI NL SE**

(56) References cited:
**EP-A- 0 148 988**
**DE-A- 3 404 589**
**FR-A- 2 372 394**
**FR-A- 2 525 746**

(73) Proprietor: **LE PAIR BEHEER B.V.**
**Rembrandtlaan 9**
**NL-5581 JP Waalre (NL)**

(72) Inventor: **Feiken, Derk**
**Veenbesstraat 80**
**NL-3765 BB Soest (NL)**

(74) Representative: **Baarslag, Aldert D. et al**
**Nederlandsch Octrooibureau**
**Scheveningseweg 82 P.O. Box 29720**
**NL-2502 LS 's-Gravenhage (NL)**

## Description

The invention is related to a device for a building with several rooms, suitable for habitation, which device has provisions for the discharge of waste air and for the supply of fresh air and further provided with a combustion boiler with a burner and a first heat exchanger situated in the discharge of the fluegases above the boiler, which first heat exchanger forms part of a water circuit for delivering warm water to heating convectors and/or tap points for warm water, and with a second heat exchanger situated downstream of the first heat exchanger in the path of the fluegases which second heat exchanger is situated in the discharge of the waste air as well, such that the fluegases and waste air are in heat exchange relationship with the flow of fresh air, which may enter the rooms through this second heat exchanger, which boiler, first heat exchanger and second heat exchanger are situated in a casing, which casing has means for feeding waste air into it, means for feeding fresh air into it, means for discharging fresh air out of it and common means for discharging fluegases and waste air out of it, as well as fans (13, 16) in the flow of the fluegases and the fresh air respectively.

Such a device is known from EP-A-0148988. In this known device a reservoir for warm water, a boiler, a heat exchanger for heating water and a second heat exchanger for heat exchange of fresh air with the warmth contained in the fluegases and the waste air are arranged above each other, whereas the connections for fresh air and for the discharge of waste air are situated in the upper part. This device is very space comsuming despite of the statement, noted in this publication, which says that a compact form is possible.

Aim of the invention is to obtain a really compact form of the device and according to the invention this aim is reached in that the second heat exchanger is situated directly next to a side of the boiler such that the inlet for fluegases and waste air is at the upperside of the second heat exchanger, the inlet for fresh air is at the upper side of the second heat exchanger as well, but separated from the fluegases and waste air, whereas the outlets for fresh air, fluegases and waste air respectively are separated from each other at the underside of the second heat exchanger.

The second heat exchanger requires a relatively large surface as the cold external air has to be preheated therein to a temperature which is at, or approaches, that one of the room temperature in exchange with air coming from the rooms as well as in exchange with the temperature, which is of course higher, of the fluegases, which, however, have lost already a part of their warmth energy in the first heat exchanger in which they have to bring the water of the water circuits at the required temperature.

By placing this second heat exchanger next to the boiler, a large height saying is obtained without the width of the device becoming unacceptable. The present materials offer the possibility to obtain a heating boiler with compact form, resulting in a boiler which even compared with the dimensions of the heat exchanger, can be small. This compact form also offers the possibility to position the chambers, which must be present at the supply respectively the discharge side of the second heat exchanger, close to each other. The heat exchanger may be a counterflow heat exchanger. Alike the known device, the heat exchanger preferably is a crossflow heat exchanger. According to the known device the fresh air flows obliquely from above downwardly through the heat exchanger and the fluegases and the exhausted waste air flow obliquely from beneath upwardly to a common discharge point.

Due to the position of the heat exchanger next to the boiler the flow of fluegases and waste air is obliquely from above downwardly to a discharge chamber whereas according to this configuration the fresh air enters a chamber situated between the boiler and the discharge chamber resulting in extra preheating especially by the heat emitted by the boiler wall, before this fresh air reaches the duct system for supply to the rooms of the building. The inflow of waste air from above offers the possibility of a compact form and a better connection to the duct system destined for the discharge.

Due to this arrangement of the several parts of the device it is possible to construct the device so small that it may be combined with a kitchen hood, i.e. that its plan dimensions of depth and width do not differ from those of the kitchen hood. It is also possible to place the device as a whole, for instance above the kitchen hood, and according to the invention in that case the heat present in the vapours which must be discharged through the kitchen hood, can be used as well. For this purpose the kitchen hood is connected to the chamber in which the fluegases and waste air are gathered, in such a way that the vapours supplied by the kitchen hood can leave through the same discharge destined for the fluegases and the waste air.

According to the invention, however, in that case flaps should be incorporated which, when the kitchen hood is functioning, ensure that the connection to the kitchen hood is open and the supply means for waste air is closed. Reason for this is that with the kitchen hood functioning, the vapours discharged by this kitchen hood and brought into the system should not enter the rooms via the waste air discharge system, whereas on the other hand with the kitchen hood not functioning the waste air should not enter the room considered through the kitchen hood.

The attention is drawn to the fact that it is known in itself, e.g. from FR-A-2,372,394, to combine a kitchen hood with a heat exchanger for preheating the air. Other possibilities are not offered here, however.

Also from DE-A-3,404,589 it is known to close the discharge means for waste air from a room in case a heating boiler starts to function.

The device to the invention can be provided with a third heat exchanger, forming part of a warm water circuit in the space or chamber in which the fluegases, waste air respectively vapours of the kitchen hood are gathered. This may be a heat exchanger in which the water destined for the first heat exchanger is preheated. In the chamber in which the fresh air is gathered after passing the second heat exchanger, a fourth heat exchanger can be present, forming part of a warm water circuit which still further preheats the air. Furthermore the first, third and fourth heat exchanger may play a role in preheating the air in case the heating boiler is switched off, whereas the warm water circuit, however, contains heat. The fan in the fluegas discharge will also in case the combustion boiler is not functioning, suck in air through the boiler. Furthermore the waste air provides for preheating of the fresh air.

The invention will further be described with the help of the drawings.

Figure 1 shows a first embodiment.

Figure 2 shows a second embodiment.

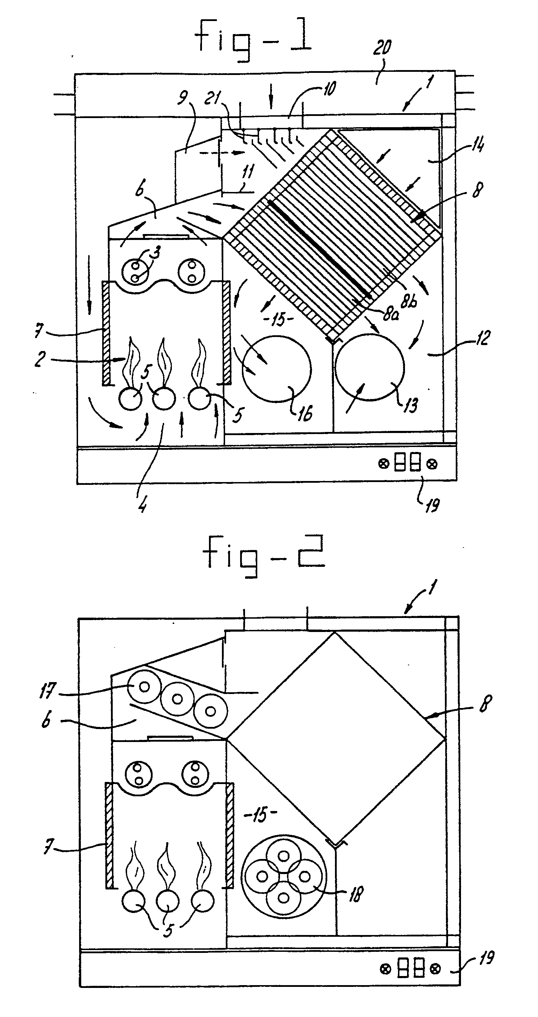

Figure 1 shows a casing 1, in which is located a heating device 2 for water provided with heating elements 3 for warm water for convectors and for tapwater. At position 4 combustion air is supplied along the burners 5, whereas through discharge duct 6 the fluegases are discharged. The heating device is also provided with a jacket 7. The fluegases are conducted to heat exchanger 8.

Together with the fluegases vapours from a kitchen hood are supplied through duct 9, as well as waste air from the rooms through duct 10. The flap 21 prevents the vapours from flowing back through duct 10.

A dividing wall 11 may be provided between these supply flows, in order to have the fluegases flowing through the heat exchanger while they are not mixed, to ensure a good heat exchange.

Preferably the heat exchanger consists of two parts 8a and 8b. Part 8a is destined for the fluegases and consists of material suitable for this purpose. Part 8b may consist of cheaper material.

Through chamber 12 and fan 13 these flows are finally discharged in a mixed state.

Furthermore fresh external air is supplied through supply chamber 14 to heat exchanger 8. This external air flows through heat exchanger 8, which is a crossflow heat exchanger, and the air flowing through said heat exchanger absorbs the heat from the fluegases, the vapours originating from the kitchen hood as well as from the waste air originating from the rooms.

Next fresh air is supplied to the room through duct 15 and fan 16. Also the fresh air flows along the wall 7 of the heating device 2 in such a way that it is heated additionally.

Furthermore a kitchen hood 19 may be placed directly underneath the casing 1. Such an embodiment is very compact, and could be hung as a unity above a furnace.

Figure 2 shows in the casing 1, also a heat exchanger 17, is situated in the connecting chamber 6, for heating liquid. In this heat exchanger 17 the liquid to be heated can be preheated by the fluegases, which increases efficiency.

In this embodiment a further heat exchanger 18 is situated as well in the chamber 15 for the supply of fresh air into the rooms. This heat exchanger heats the fresh air up to a temperature such that an air heating is provided.

The air plenum casing 20 in figure 1 is situated at the upper side of casing 1. The kitchen hood 19 is situated at the underside. The reverse case is also possible, with the air plenum casing at the underside, especially when no kitchen hood is provided. Furthermore the direction of functioning of the fans 13, 16 respectively may be reversible, especially when the air casing is situated at the underside, in which case the connection to e.g. the chimney, should be of course adapted.

## Claims

1. Device for a building with several rooms, suitable for habitation, which device has provisions for the discharge (13) of waste air and for the supply (16) of fresh air and further provided with a combustion boiler (2) with a burner (5) and a first heat exchanger (3) situated in the discharge of the fluegases above the boiler, which first heat exchanger forms part of a water circuit for delivering warm water to heating convectors and/or tap points for warm water, and with a second heat exchanger (8) situated downstream of the first heat exchanger (3) in the path of the fluegases which second heat exchanger (8) is situated in the discharge (10, 12, 13) of the waste air as well, such that the fluegases and waste air are in heat exchange relationship with the flow of fresh air, which may enter the rooms through this second heat exchanger (8), which boiler (2), first heat exchanger (3) and second heat exchanger (8) are situated in a casing (1), which casing has means for feeding waste air into it, means (14) for feeding fresh air into it, means (16) for discharging fresh air out of it and common means (12, 13) for discharging fluegases and waste air out of it, as well as fans (13, 16) in the flow of the fluegases and the fresh air respectively, **characterized in that** the second heat exchanger (8) is situated directly next to a side of the boiler (2) such that the inlet for fluegases and waste air is at the upperside of the second heat exchanger (8), the inlet for fresh air is at the upper side of the second heat exchanger as well, but separated from the fluegases and waste air, whereas the outlets for fresh air, fluegases and waste air respectively are separated from each other at the underside of the second heat exchanger (8).

2. Device for a building according to claim 1, **characterized in that** above the inlet of the second heat exchanger (8) for the fluegases and waste air a connecting chamber (6) has been provided, connecting the exit of the first heat exchanger (3) to the second heat exchanger (8), which connecting chamber (6) has an opening (10) forming the connection with the means for feeding waste air towards the second heat exchanger (8), whereas the casing underneath the second heat exchanger 98) has a chamber (12) which in its turn is connected with the means (13) for discharging waste air and fluegases out of the casing.

3. Device for a building according to claim 1 or 2, **characterized in that** the outlet of fresh preheated air of the second heat exchanger (8) opens into a chamber (15) located beneath the second heat exchanger (8) and between the adjacent wall of the boiler (2) and a wall separating said chamber (15) from the discharge chamber (12) of fluegases and waste air.

4. Device according to one or more of the preceding claims, **characterized in that** the fans (13, 16) for the discharge and supply respectively are situated in the chambers (12 and 15 respectively) which are located beneath the second heat exchanger (8).

5. Device according to one or more of the preceding claims 2-4, characterized in that a guide plate (11) is provided in the connecting chamber (6) for the supply of fluegases and waste air towards the second heat exchanger (8), which guide plate (11) at least partly separates the flows of fluegases and waste air.

6. Device according to one or more of the preceding claims, **characterized in that** the casing (1), provided with the boiler (2), the heat exchangers (3 and 8), the connecting chamber (6) and the fans (13, 16) is combined with a kitchenhood (19) having a discharge duct (9), the outlet of which opens into the connecting chamber (6) for fluegases and waste air, which outlet of said duct (9) as well as the inlet (10) for waste air are provided with flaps (21), such that when the kitchenhood (19) is functioning, the outlet of the duct (9) towards the second heat exchanger (8) is open and the inlet (10) for waste air is closed, and vice versa.

7. Device according to one or more of the preceding claims, **characterized in that** in the connecting chamber (6), destined for feeding fluegases and waste air towards the second heat exchanger (8), a third heat exchanger (17) is placed, forming part of a water circuit.

8. Device according to one or more of the preceding claims, **characterized in that** a fourth heat exchanger (18) is placed in the chamber (15) lying next to the boiler wall (7), said fourth heat exchanger forming part of a water circuit.

## Ansprüche

1. Vorrichtung für ein zum Wohnen geeignetes Gebäude mit mehreren Räumen, welche Vorrichtung Massnahmen zur Entsorgung (13) von Abluft und zur Versorgung (16) mit Frischluft aufweist und ausserdem mit einem Verbrennungs-Heizkessel (2) mit einem Brenner (5) und einem ersten, im Austritt der Abgase über dem Heizkessel angeordneten Wärmeaustauscher (3) versehen ist, welcher ersten Wärmeaustauscher Teil eines Wasserkreislaufes zur Lieferung von Warmwasser an Umluft-Heizkörper und/oder Zapfstellen für Warmwasser ist, und mit einem zweiten Wärmeaustauscher (8), der stromabwärts vom ersten Wärmeaustauscher (3) im Pfad der Abgase angeordnet ist, welcher zweite Wärmeaustauscher (8) ebenfalls im Austritt (10, 12, 13) von Abluft angeordnet ist, so dass die Abgase und die Abluft in Wärmeaustauschbeziehung zur Frischluftströmung sind, die in die Räume durch diesen zweiten Wärmeaustauscher (8) eintreten kann, welche Heizkessel (2), erster Wärmeaustauscher (3) und zweiter Wärmeaustauscher (8) in einem Gehäuse (1) angeordnet sind, welches Gehäuse Mittel zum Zuführen von Abluft zu ihm, Mittel (14) zum Zuführen von Frischluft zu ihm, Mittel (16) zum Auslassen von Frischluft aus ihm und gemeinsame Mittel (12, 13) zum Auslassen von Abgasen und Abluft aus ihm sowie Gebläse (13, 16) in der Abgasströmung bzw. Frischluftströmung aufweist, dadurch gekennzeichnet, dass der zweite Wärmeaustauscher (8) unmittelbar neben einer Seite des Heizkessels (2) angeordnet ist, so dass sich der Einlass für Abgase und Abluft auf der Oberseite des zweiten Wärmeaustauschers (8), der Einlass für Frischluft ebenfalls auf der Oberseite des zweiten Wärmeaustauschers, jedoch von den Abgasen und der Abluft getrennt befindet, während die Austritte für Frischluft, Abgase bzw. Abluft an der Unterseite des zweiten Wärmeaustauschers (8) voneinander getrennt sind.

2. Vorrichtung für ein Gebäude nach Anspruch 1, dadurch gekennzeichnet, dass über dem Einlass des zweiten Wärmeaustauschers (8) für die Abgase und Abluft eine Verbindungskammer (6) vorgesehen ist, welche den Austritt aus dem ersten Wärmeaustauscher (3) mit dem zweiten Wärmeaustauscher (8) verbindet, welche Verbindungskammer (6) eine Oeffnung (10) aufweist, welche die Verbindung mit den Mitteln zum Zuführen von Abluft zum zweiten Wärmeaustauscher (8) bildet, während das Gehäuse unterhalb des zweiten Wärmeaustauschers (8) eine Kammer (12) aufweist, die ihrerseits mit den Mitteln (13) zum Auslassen von Abluft und Abgasen aus dem Gehäuse verbunden ist.

3. Vorrichtung für ein Gebäude nach Anspruch 1 oder 2, dadurch gekennzeichnet, dass der Austritt der vorgeheizten Frischluft aus dem zweiten Wärmeaustauschers (8) sich zu einer Kammer (15) hin öffnet, die unter dem zweiten Wärmeaustauscher (8) und zwischen der angrenzenden Wandung des Heizkessels (2) und einer diese Kammer (15) von der Kammer (12) zum Auslassen von Abgasen und Abluft trennenden Wandung angeordnet ist.

4. Vorrichtung nach einem oder mehreren der vorangehenden Ansprüche, dadurch gekennzeichnet, dass die Gebläse (13, 16) zur Entsorgung bzw. zur Versorgung in den Kammern (12 bzw. 15) angeordnet sind, die sich unter dem zweiten Wärmeaustauscher (8) befinden.

5. Vorrichtung nach einem oder mehreren der vorangehenden Ansprüche, dadurch gekennzeichnet, dass zur Versorgung des zweiten Wärmeaustauschers (8) mit Abgasen und Abluft eine Führungsplatte (11) in der Verbindungskammer (6) vorgesehen ist, welche Führungsplatte (11) zumindest teilweise die Abgasströmung und die Abluftströmung voneinander trennt.

6. Vorrichtung nach einem oder mehreren der vorangehenden Ansprüche, dadurch gekennzeichnet, dass das mit dem Heizkessel (2), den Wärmeaustauschern (3 und 8), der Verbindungskammer (6) und den Gebläsen (13, 16) versehene Gehäuse (1) mit einem Küchenabzug (19) kombiniert ist, der einen Austrittsschacht (9) aufweist, dessen Austritt sich zur Verbindungskammer (6) für Abgase und Abluft hin öffnet, wobei der Austritt des genannten Austrittsschachts (9) wie auch der Einlass (10) für Abluft mit Klappen (21) versehen sind, so dass, wenn der Küchenabzug (19) in Betrieb ist, der Austritt des Austrittsschachts (9) zum zweiten Wärmeaustauscher (8) hin offen und der Einlass (10) für Abluft geschlossen ist, und umgekehrt.

7. Vorrichtung nach einem oder mehreren der vorangehenden Ansprüche, dadurch gekennzeichnet, dass ein dritter Wärmeaustauscher (17) in die zum Zuführen von Abgasen und Abluft zum zweiten Wärmeaustauscher (8) bestimmte Verbindungskammer (6) angeordnet ist, der Teil eines Wasserkreislaufes ist.

8. Vorrichtung nach einem oder mehreren der vorangehenden Ansprüche, dadurch gekennzeichnet, dass ein vierter Wärmeaustauscher (18) in der die Wandung (7) des Heizkessels angrenzenden Kammer (15) angeordnet ist, wobei dieser vierte Wärmeaustauscher Teil eines Wasserkreislaufes ist.

## Revendications

1. Dispositif pour un bâtiment adapté à l'habitation et comportant plusieurs chambres, lequel dispositif comporte des mesures en vue de l'évacuation (13) d'air vicié et de la fourniture (16) d'air frais et comporte en outre une chaudière (2) à combustion munie d'un brûleur (5) et un premier échangeur de chaleur (3) situé dans la sortie des gaz de combustion au-dessus de la chaudière, lequel premier échangeur de chaleur fait partie d'un circuit de distribution d'eau destiné à la fourniture d'eau chaude à des radiateurs à convection et/ou des emplacements de robinets de distribution d'eau chaude, et un deuxième échangeur de chaleur (8) situé en aval du premier échangeur de chaleur (3) dans le chemin des gaz de combustion, lequel deuxième échangeur de chaleur (8) est lui aussi situé dans la sortie (10, 12, 13) d'air vicié, de sorte que les gaz de combustion et l'air vicié sont en relation d'échange de chaleur avec le courant d'air frais qui peut entrer dans les chambres à travers ce deuxième échangeur de chaleur (8), lesquels chaudière (2), premier échangeur de chaleur (3) et deuxième échangeur de chaleur (8) sont situés dans un boîtier (1), lequel boîtier comporte des moyens pour lui fournir de l'air vicié, des moyens (14) pour lui fournir de l'air frais, des moyens (16) pour en faire sortir de l'air frais et des moyens communs (12, 13) pour en faire sortir des gaz de combustion et de l'air vicié ainsi que des souffleries (13, 16) dans les courants respectifs de gaz de combustion et d'air frais, caractérisé en ce que le deuxième échangeur de chaleur (8) est situé au voisinage immédiat d'un côté de la chaudière (2), de sorte que l'entrée des gaz de combustion et de l'air vicié se trouve du côté supérieur du deuxième échangeur de chaleur (8), l'entrée de l'air frais se trouve elle aussi du côté supérieur du deuxième échangeur de chaleur mais séparée des gaz de combustion et de l'air vicié, tandis que les sorties respectives d'air frais, de gaz de combustion et d'air vicié sont séparées les unes des autres du côté inférieur du deuxième échangeur de chaleur (8).

2. Dispositif pour un bâtiment selon la revendication 1, caractérisé en ce qu'au-dessus de l'entrée du deuxième échangeur de chaleur (8) pour les gaz de combustion et l'air vicié est prévue une chambre de communication (6) qui relie la sortie du premier échangeur de chaleur (3) au deuxième échangeur de chaleur (8), laquelle chambre de communication (6) présente une ouverture (10) qui forme la liaison avec les moyens pour fournir de l'air vicié au deuxième échangeur de chaleur (8), tandis que le boîtier situé au-dessous du deuxième échangeur de chaleur (8) comporte une chambre (12) qui est à son tour reliée aux moyens (13) pour évacuer du boîtier l'air vicié et les gaz de combustion.

3. Dispositif pour un bâtiment selon la revendication 1 ou 2, caractérisé en ce que la sortie d'air frais préchauffé du deuxième échangeur de chaleur (8) s'ouvre vers une chambre (15) située au-dessous du deuxième échangeur de chaleur (8) et entre la paroi adjacente de la chaudière (2) et une paroi séparant cette chambre (15) de la chambre d'évacuation (12) de gaz de combustion et d'air vicié.

4. Dispositif selon une ou plusieurs des revendications précédentes, caractérisé en ce que les souffleries respectives (13, 16) pour l'évacuation et la fourniture sont situées dans les chambres (12 resp. 15) qui se trouvent au-dessous du deuxième échangeur de chaleur (8).

5. Dispositif selon une ou plusieurs des revendications précédentes, caractérisé en ce qu'une plaque de guidage (11) est prévue dans la chambre de communication (6) pour la fourniture de gaz de combustion et d'air vicié au deuxième échangeur de chaleur (8), laquelle plaque de guidage (11) sépare au moins partiellement les courants de gaz de combustion et d'air vicié.

6. Dispositif selon une ou plusieurs des revendications précédentes, caractérisé en ce que le boîtier (1) pourvu de la chaudière (2), des échangeurs de chaleur (3 et 8), de la chambre de communication (6) et des souffleries (13, 16) est combiné avec une hotte d'évacuation de cuisine (19) qui comporte un conduit d'évacuation (9) dont la sortie s'ouvre vers la chambre de communication (6) pour les gaz de combustion et l'air vicié, laquelle sortie dudit conduit (9) aussi bien que l'entrée (10) d'air vicié sont pourvues de volets (21), de sorte que lorsque la hotte d'évacuation de cuisine (19) est en fonctionnement la sortie du conduit (9) vers le deuxième échangeur de chaleur (8) est ouverte et l'entrée (10) d'air vicié est fermée, et vice versa.

7. Dispositif selon une ou plusieurs des revendications précédentes, caractérisé en ce que dans la chambre de communication (6) destinée a la fourniture de gaz de combustion et d'air vicié au deuxième échangeur de chaleur (8) est placé un troisième échangeur de chaleur (17) qui fait partie d'un circuit de distribution d'eau.

8. Dispositif selon une ou plusieurs des revendications précédentes, caractérisé en ce qu'un quatrième échangeur de chaleur (18) est placé dans la chambre (15) située au voisinage de la paroi (7) de la chaudière, lequel quatrième échangeur de chaleur fait partie d'un circuit de distribution d'eau.

## Fig-1

## Fig-2